# EUROPÄISCHE PATENTSCHRIFT

(11) **EP 3 113 641 B1**
(45) Veröffentlichungstag und Bekanntmachung des Hinweises auf die Patenterteilung: **04.05.2022**
(21) Anmeldenummer: 15713397.6
(22) Anmeldetag: 06.03.2015
(51) Int. Cl.: A43B 3/10, A43B 13/12, A43B 13/18, A43B 13/20, A43B 7/14, B29D 35/14

(54) **FUSSBEKLEIDUNG MIT ELASTISCHER ZWISCHENSOHLE**
FOOTWEAR COMPRISING AN ELASTIC INTERMEDIATE SOLE
CHAUSSURE À SEMELLE INTERMÉDIAIRE ÉLASTIQUE

(30) Priorität: 07.03.2014 DE 102014003017
(43) Veröffentlichungstag der Anmeldung: 11.01.2017
(73) Patentinhaber: Enquiring Eye GmbH, 48147 Münster (DE); KLÖCKNER DESMA SCHUHMASCHINEN GmbH, 28832 Achim (DE)
(72) Erfinder: MARSCHALL, Ursula, 48147 Münster (DE); SEUSER, Axel, 53127 Bonn (DE); KERSPE, Lars, 51688 Wuppertal (DE)
(74) Vertreter: Schneiders, Josef
(86) Internationale Anmeldenummer: PCT/EP2015/054763
(87) Internationale Veröffentlichungsnummer: WO 2015/132400

(56) Entgegenhaltungen:
- WO-A2-2013/098165
- CN-A- 103 251 173
- US-A- 3 675 346
- US-A- 4 874 640
- US-A- 5 617 650
- US-A- 6 127 010
- US-A1- 2003 046 831

## Beschreibung

Die Erfindung betrifft eine Fußbekleidung mit einem mehrschichtigen Aufbau der Sohle nach dem Oberbegriff des Anspruchs 1. Das Dokument US 4874640 A offenbart diese Fußbekleidung. Während des Laufvorgang wird der Bewegungsapparat nicht unerheblichen Belastungen ausgesetzt. Viele Läufer, auch solche die keinen Leistungssport betreiben, entwickeln im Laufe der Zeit Knie- und Gelenkbeschwerden, die nicht nur beim Sport, sondern auch bei alltäglichen Betätigungen erhebliche Probleme bereiten können. Für Schuhe wurden daher Dämpfungselemente entwickelt, die diesen Belastungen entgegen wirken sollen.

Im Bereich der Laufschuhe sind verschiedene Dämpfungskonzepte entwickelt worden.

So wurde von der Firma Nike ein System entwickelt, das auf einer Luftsohle basiert. Ein mit Gas gefülltes Luftpolster wird dazu in die Sohle oder in Sohlenteile eines Laufschuhes eingearbeitet. Unter Belastung wird das Gas komprimiert und sorgt dergestalt für eine Dämpfung.

Von der Firma Adidas ist ein Laufschuh bekannt, der Luft in Luftkammern eingeschlossen enthält, die durch dünne Strömungskanäle miteinander verbunden sind. Beim Laufvorgang wird die Luft durch die Strömungskanäle, je nach Belastung verlagert. Auch hier findet auf diese Weise eine Dämpfung statt.

Von der Firma Reebok ist eine Sohle bekannt, in der Luft in einem Wabensystem aus Polyurethan eingeschlossen ist. Die Waben sind unterschiedlich groß und können so individuell bestimmte Teile des Fußes abstützen. Ein ähnliches System wurde von der Firma Puma entwickelt.

Alle diese Systeme haben den Nachteil, dass sie "federnd" eingestellt sind. Fersenpolsterungen führen beispielsweise zur direkten Drucksenkung während des Fersenkontakt zu Beginn der Standphase beim Gang nur am Aufprallpunkt der Ferse. Hierbei kommt es zur Umwandlung von kinetische Energie in statische Energie, die in dem komprimierten Gas in der Sohle gespeichert wird. Im weiteren Gangverlauf kommt es dann zur Kraftübertragung auf den gesamten Fuß und zum fortschreitenden Abheben der Ferse. Sobald die Ferse den Druck von der komprimierten Sohle nimmt, gibt diese die gespeicherte statische Energie als kinetische Energie wieder in das System des Fußes zurück. Dabei kommt es zu einem zusätzlichen Kraftimpuls in das Sprunggelenk.

Durch diesen zusätzlichen Impuls in das Sprunggelenk wird zwar einerseits eine nicht unerwünschte Unterstützung des Laufvorgangs erzielt - es wird Energie zurückgewonnen - jedoch wirkt es dem eigentlichen Ziel, der Schonung des Gelenk- und Bewegungsapparat des Läufers, diametral entgegen. Tatsächlich entsteht eine nicht unerhebliche Mehrbelastung. Dabei ist das eigentliche Ziel solcher Dämpfungsmaßnahmen die Belastung des Bewegungsapparats zu vermindern.

Zur Verdeutlichung des Problems sei darauf hingewiesen, dass die maximale Fersenbelastung beim einbeinigen Sprung das 3,5-fache des Körpergewichts betragen kann. Selbst beim normalen Gang wirkt eine Belastung von bis zu 130% des Körpergewichts auf die Ferse.

Dementsprechend ist es Aufgabe der Erfindung, eine Fußbekleidung bereit zu stellen, die die beim Laufvorgang auf den Fuß, insbesondere die Ferse und den Vorfuß wirkende Energie wirkungsvoll absorbiert und abführt.

Diese Aufgabe wird mit einer Fußbekleidung nach Anspruch 1 gelöst.

Die erfindungsgemäße Fußbekleidung kann eine Fußbekleidung beliebiger Art sein, beispielsweise ein Laufschuh, ein Schuh für den täglichen Gebrauch wie auch eine Sandale, etwa eine Freizeitsandale, wie sie unter der Bezeichnung Flip-Flop auf dem Markt ist. Der erfinderische Effekt der Dämpfung der Laufbewegung wird in allen derartig ausgestatteten Fußbekleidungen erreicht. Eine entsprechende Dämpfung kann auch mit einer Einlegesohle erreicht werden.

Die erfindungsgemäße Fußbekleidung weist einen mehrschichtigen, insbesondere dreischichtigen Aufbau der Sohle auf. In der Regel besteht sie aus einer Außensohle (Laufsohle), einer Innensohle (Brandsohle) sowie einer Zwischensohle. Erfindungsgemäß ist die Außensohle starrer als die Zwischensohle. Es können mehr als nur eine Zwischensohle vorhanden sein, wobei in jedem Fall eine der Zwischensohlen erfindungsgemäß gestaltet ist. Darüber hinaus können mehrere Innensohlen vorhanden sein, beispielsweise auch solche, die nur den Ballenbereich oder nur den Fersenbereich abdecken. Gegebenenfalls kann die Außenhaut der Zwischensohle zugleich auch als Brandsohle dienen bzw. die Brandsohle in die Zwischensohle integriert sein.

Die Zwischensohle ist elastisch ausgestaltet und erzeugt den erfindungsgemäßen Dämpfungseffekt.

Dazu besteht die Zwischensohle aus einem Schaumstoff mit einer offenen Zellstruktur. Die Zellstruktur ist mit einem flüssigen Medium befüllt und einer gas- und flüssigkeitsdichten Außenhaut umgeben. Die offenzellige Struktur des elastischen Materials erlaubt es dem Medium, sich innerhalb der Zwischensohle zu verlagern und so einen Teil der Belastung, insbesondere der Ferse, abzufangen. Geeignete Schaumstoffe sind die aus der Kunststofftechnik bekannten Schäume, etwa aus Polyethylen, Polypropylen, Polystyrol, PET und Polyurethan.

Die Zwischensohle ist erfindungsgemäß aus einem Material im Integralschaumverfahren herzustellen dergestalt, dass Außenhaut und Zellstruktur aus einem einheitlichen Material bestehen.Besonders bevorzugt sind Zwischensohlen aus integral verschäumtem Polyurethan, die dadurch automatisch eine geschlossene Außenhaut und einen zelligen Kern aufweisen. Ein weiteres besonders gut geeignetes Material ist Polyester-Urethan-Kautschuk, der sehr gute elastische Eigenschaften aufweist.

Eingesetzt werden können beispielsweise Materialen mit einem Raumgewicht von 40 bis 100 kg/m3. Die Porengröße beträgt 0,5 bis 5 mm zweckmäßigerweise 0,5 bis 3 mm. Das Raumgewicht des Schaums wie auch die Porengröße haben Einfluss auf die Dämpfungswirkung dadurch, dass eine geringe Porengröße dem in der Schaumstruktur fließenden Fluid einen größeren Reibungswiderstand entgegensetzt. Damit können über die Porengröße Zwischensohlen hergestellt werden, die den individuellen Bedürfnissen des jeweiligen Käufers angepasst sind. Es können auch Flüssigkeiten und Gas gemeinsam eingesetzt werden.

Als Flüssigkeiten kommen insbesondere Wasser, Öle oder auch Alkohole in Frage, wie auch Mischungen mehrerer Flüssigkeiten, etwa von Wasser und Polyolen. Als Öle können pflanzliche wie mineralische Öle, aber auch synthetische Öle eingesetzt werden, etwa Silikonöle. Mehrwertige Alkohole, die geeignet sind, sind beispielsweise Glykole, auch oligomere Glykole, wie auch Glycerin. Wird Wasser eingesetzt, kann dies mit einem Verdickungsmittel verdickt werden, um die Viskosität zu erhöhen. Dies gilt auch für andere Flüssigkeiten. Über die Viskosität der in der Zellstruktur zu verlagernden Flüssigkeit kann der Dämpfungseffekt ebenfalls gesteuert werden. Es versteht sich, dass die erfindungsgemäße Zwischensohle auch teilweise mit einem gasförmigen und teilweise mit einem flüssigen Medium gefüllt werden kann. Als Gase kommen dabei in erster Linie Luft, Stickstoff CO2, aber auch Edelgase in Frage.

Zum Befüllen/Nachfüllen weist die Zwischensohle seitlich ein Ventil auf.

Die erfindungsgemäße Fußbekleidung weist die Zwischensohle mit der Zellstruktur vorzugsweise zwischen der Außensohle und Innensohle auf, wobei sie vollständig eingeschlossen ist. Dies schützt zum einen die Zwischensohle vor Beschädigung, erlaubt aber zum anderen eine einfache Fertigung, da die Zwischensohle nicht mit den anderen Sohlen vernäht werden muss. Es versteht sich, dass Außensohle, Innensohle und Zwischensohle miteinander verklebt oder auf andere Weise miteinander verbunden sein können.

Die erfindungsgemäße Fußbekleidung kann zusätzlich Polsterelemente aufweisen, die beispielsweise in Eintiefungen der Innensohle, insbesondere im Fersen- und/oder Ballenbereich angeordnet sein können. Hierzu können in diesen Eintiefungen Klettelemente angeordnet sein, mit denen diese Polsterelemente festgehalten werden. Diese Art der Einbringung hat gegenüber dem Verkleben den Vorteil, dass diese Polsterelemente nach Bedarf ausgetauscht werden können, auch um einen geringeren oder verbesserten Polstereffekt zu erzielen.

Es versteht sich, dass die erfindungsgemäße Fußbekleidung im Übrigen normal gestaltet sein kann, d.h. mit in der Schuhindustrie üblichen Dekorelementen ausgestattet werden kann.

Die Sohle der erfindungsgemäßen Fußbekleidung kann die übliche Form haben, d.h. absatzlos oder mit Absätzen versehen sein. Die Sohle kann elastisch und biegsam oder härter eingestellt sein oder auch konvex ausgebildet sein, sodass das Abrollen des Fußes erleichtert wird.

Mit der erfindungsgemäßen Fußbekleidung wird erreicht, dass der Initialkontakt der Ferse beim Gehen das in der Zwischensohle enthaltene Medium nach vorne in den Ballenbereich verdrängt. Dadurch wird der dämpfende Effekt beim Fersenkontakt erzielt. Beim Abrollen wird dann das Medium zurück in den Fersenbereich der Zwischensohle verlagert, wodurch der ursprüngliche Zustand wieder hergestellt wird und ein dämpfender Effekt beim Zehenabdruck zur Entlastung des Vorfußes beiträgt. Dieser Rückfluss des verdrängten Materials ist dabei langsamer, als die Abhebgeschwindigkeit der Ferse, was eine zusätzliche Belastung des Sprunggelenks vermeidet.

Beim Laufvorgang kommt es zur Verteilung des fluiden Mediums zunächst aus dem Fersenbereich in den Ballenbereich des Fußskelettes, der als nächstes belastet wird. Dies unterstützt die Lastübernahme durch den gesamten Fuß, von der Ferse bis hin zum Ballen und in dem Zehenbereich. Selbst der Großzeh und das Großzehengrundgelenk tragen beim Abheben einen Teil der Belastung. Grundsätzlich wird also der Gelenkapparat des Läufers weniger belastet, nicht zusätzlich.

Die Erfindung wird durch die beiliegenden Abbildungen bevorzugter Ausführungsformen näher erläutert. Es zeigen:
- Fig. 1: eine Draufsicht auf eine erfindungsgemäße Sandale;
- Fig. 2: die Sandale von Fig. 1 seitlich von der Zehenseite her; und
- Fig. 3: die Sandale von der Fig. 1 seitlich von der Fußinnenseite her.

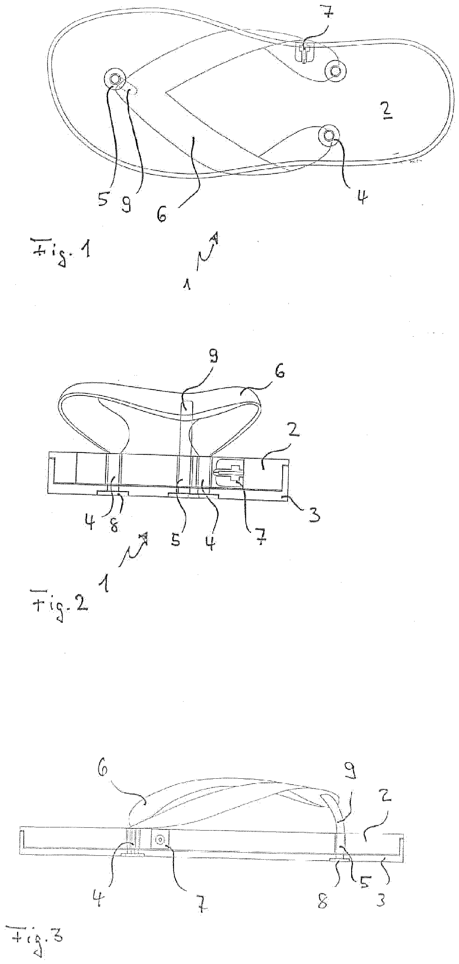

Die Sandale 1 gemäß Fig. 2 weist eine Zwischensohle 2 auf, in die ein Ventilelement eingelassen ist. Das Ventilelement 7 dient zu Erstbefüllung und ggf. zur Ergänzung und zum Austauschen des fluiden Mediums in der Zwischensohle. das Ventil 7 ist vorzugsweise selbstschlie-ßend ausgelegt, kann aber auch mit einem Stopfen verschlossen werden oder zugeschweißt werden. Im letzteren Fall ist eine erneute Befüllung ausgeschlossen.

Die Sandale selbst weist ein Riemenkonstrukt 6 zur Festlegung am Fuß des Trägers auf, das über zwei hintere Halterungen 4 und eine vordere Halterung 5 in dem Sohlenkonstrukt 2/3 verankert ist. Die Halterungen 4 und 5 ragen durch die Zwischensohle 2 hindurch in die Außensohle 3 und sind in der Außensohle 3 durch tellerförmige Erweiterungen 8 (siehe Fig. 2/3) verankert. Es versteht sich, dass die Halterungen 4 und 5 in Kanälen, die durch die Zwischensohle 2 geführt sind, verlaufen, so dass eine fluiddichte Abschirmung gegen das in der Zwischensohle 2 geführte fluide Medium gegeben ist.

Die Halterung 5 mit dem Steg 9 befindet sich im vorderen Bereich der Sandale und ist so angeordnet, dass der Sandalenträger den Steg 9 mit dem großen und dem zweiten Zeh greifen kann. Der Steg 9 ist mit dem Riemenkonstrukt 6 verklebt oder vernäht und reicht mit der Halterung 5 durch das Sohlenkonstrukt 2/3 hindurch zur tellerförmigen Erweiterung 8 der Halterung 5 in der Außensohle (3).

Es versteht sich, dass die tellerförmigen Erweiterungen 8 der Halterungen 4 und 5 an der Unterseite (Außensohle 3) und Oberseite (Zwischensohle 2 oder gegebenenfalls einer Innensohle) in die Sohle eingetieft sind, d.h. nicht hervorstehen.

Fig. 2 zeigt die Sandale gemäß Fig. 1 von der Zehenseite her. Zu erkennen sind die Zwischensohle 2 und die darunter angeordnete Außensohle 3, wobei die Außensohle seitlich um die Zwischensohle 2 herumgezogen ist. Auf diese Art und Weise bewirkt die Außensohle 3 einen seitlichen Schutz der Zwischensohle 2. Dargestellt ist auch das Ventil 7 in der Zwischensohle 2.

Das Riemenkonstrukt 6 ist über die Halterungen 4 im Fersenbereich in der Aussensohle 3 verankert, wobei sich im Bereich der Außensohle tellerförmige Erweiterungen 8 befinden, die in die Außensohle 3 eingelassen sind. Die Halterungen 4 und 5 werden über diese tellerförmigen Erweiterungen 8 in der Außensohle 3 gehalten. Dabei können die Teller 8 mit der Außensohle verklebt oder verschweißt sein.

Zu erkennen ist, dass die Halterungen 4 und 5, wobei letztere in den Steg 9 übergeht, in der Zwischensohle angeordneten Kanälen verlaufen, die die Abschirmung im Hinblick auf die Befüllung der Zwischensohle bewirken. Der Steg 9 ist mit dem Riemenkonstrukt verklebt oder vernäht.

Fig. 3 zeigt die Sandale von Fig. 1/2 in seitlicher Ansicht von der Fußinnenseite her. Zu erkennen ist das Riemenkonstrukt 6 und mit dem Steg 9, die Zwischensohle mit dem Ventil 7 sowie die Halterungen 4 und 5 mit den Haltetellern 8. Zu erkennen ist auch, dass die Außensohle 3 im Bereich der Zehen und der Ferse seitlich an der Zwischensohle hochgezogen und damit auch im vorderen und hinteren Bereich einen Schutz der Zwischensohle 2 bewirkt.

Es versteht sich, dass die dargestellte Sandale nur ein Ausführungsbeispiel ist. Die erfindungsgemäße Fußbekleidung kann gleichfalls als konventioneller Schuh ausgebildet werden, wie auch als Slipper mit offenem oder geschlossenem Fersenbereich. Die Außensohle kann im Fersenbereich in einen Absatz übergehen, sie kann auch, zur Förderung des Abrollmechanismus mit einer Wölbung im zentralen Bereich ausgestattet sein. Wesentlich ist, dass die Zwischensohle 2 so ausgebildet ist, dass beim Abrollen des Fußes eine durch die Laufbewegung induzierte Verschiebung des fluiden Mediums in der Zwischensohle stattfindet.

## Patentansprüche

1. Fußbekleidung mit einem mehrschichtigen Aufbau der Sohle, wobei die Sohle wenigstens eine Außensohle (3) und eine Zwischensohle (2) aufweist und die Zwischensohle (2) aus einem Schaumstoff mit einer offenen Zellstruktur besteht, die eine gas- und flüssigkeitsdichte Außenhaut aufweist, wobei die Zellstruktur mit einem flüssigen Medium zumindest teilweise gefüllt ist, wobei die Außensohle (3) seitlich um die Zwischensohle (2) herumgezogen ist und die Außensohle (3) starrer ist als die Zwischensohle (2), **dadurch gekennzeichnet, dass** die Zwischensohle (2) aus einem Material in einem Integralschaumverfahren hergestellt ist, dergestalt, dass die Außenhaut und die Zellstruktur aus einem einheitlichen Material bestehen.

2. Fußbekleidung nach Anspruch 1, **dadurch gekennzeichnet, dass** der Schaumstoff ein Raumgewicht von 40 bis 100 kg/m³ aufweist.

3. Fußbekleidung nach einem der Ansprüche 1 oder 2, **dadurch gekennzeichnet, dass** die Poren eine Größe im Bereich von 0,5 bis 3 mm aufweisen.

4. Fußbekleidung nach einem der vorstehenden Ansprüche, **dadurch gekennzeichnet, dass** das flüssige Medium Wasser, ein Polyol oder eine Mischung davon ist.

5. Fußbekleidung nach Anspruch 4, **dadurch gekennzeichnet, dass** das flüssige Medium Wasser ist, das zur Erhöhung der Viskosität ein Verdickungsmittel enthält.

6. Fußbekleidung nach einem der Ansprüche 1 bis 5, **dadurch gekennzeichnet, dass** die Zwischensohle (2) neben dem flüssigen Medium Luft enthält.

7. Fußbekleidung nach einem der vorstehenden Ansprüche, **gekennzeichnet durch** ein Ventil (7) in der Zwischensohle (2).

8. Fußbekleidung nach einem der vorstehenden Ansprüche, **dadurch gekennzeichnet, dass** die Außensohle (3) und eine Innensohle die Zwischensohle (2) einschließen, wobei die Außensohle (3) härter ausgebildet ist als die Innensohle.

9. Fußbekleidung nach einem der vorstehenden Ansprüche, **gekennzeichnet durch** eine Innensohle, die Eintiefungen zur Einbringung von Polsterelementen aufweist.

10. Fußbekleidung nach Anspruch 9, **dadurch gekennzeichnet, dass** die Eintiefungen Fersen- und/oder Ballenbereich angeordnet sind.

11. Fußbekleidung nach einem der Ansprüche 9 oder 10, **dadurch gekennzeichnet, dass** die Eintiefungen Klettelemente aufweisen.

12. Sandalen, insbesondere Flip-Flops, nach einem der vorstehenden Ansprüche.

## Claims

1. Footwear having a multi-layer sole structure, wherein the sole comprises at least one outsole (3) and one midsole (2), and the midsole (2) consists of a foam having an open cell structure comprising a gas- and liquid-tight outer skin, wherein the cell structure is filled at least partially with a liquid medium, wherein the outsole (3) wraps around the midsole (2) laterally and the outsole (3) is more rigid than the midsole (2), **characterised in that** the midsole (2) is made of a material manufactured by an integral skin foam process in such a manner that outer skin and cell structure consist of a uniform material.

2. The footwear according to claim 1, **characterised in that** the foam has a density of 40 to 100 kg/m³.

3. The footwear according to one of claims 1 or 2, **characterised in that** the pores have a size in the range of 0.5 to 3 mm.

4. The footwear according to one of the preceding claims, **characterised in that** the liquid medium is water, a polyol or a mixture thereof.

5. The footwear according to claim 4, **characterised in that** the liquid medium is water containing a thickening agent for the purpose of increasing the viscosity.

6. The footwear according to one of claims 1 to 5, **characterised in that** the midsole (2) contains air in addition to the liquid medium.

7. The footwear according to one of the preceding claims, **characterised by** a valve (7) in the midsole (2).

8. The footwear according to one of the preceding claims, **characterised in that** the midsole (2) is sandwiched between the outsole (3) and an insole, the outsole (3) being configured so as to be harder than the insole.

9. The footwear according to one of the preceding claims, **characterised by** an insole comprising recesses for the insertion of cushioning elements.

10. The footwear according to claim 9, **characterised in that** the recesses are arranged the heel and/or ball area.

11. The footwear according to one of claims 9 or 10, **characterised in that** the recesses are provided with hook-and-loop elements.

12. Sandals, in particular flip-flops, according to one of the preceding claims.

## Revendications

1. Chaussure comprenant une structure multicouche de la semelle, la semelle présentant au moins une semelle extérieure (3) et une semelle intermédiaire (2), et la semelle intermédiaire (2) étant constituée d'une mousse comprenant une structure cellulaire ouverte, qui présente une peau extérieure étanche aux gaz et aux liquides, la structure cellulaire étant au moins partiellement remplie d'un milieu liquide, la semelle extérieure (3) étant tirée latéralement autour de la semelle intermédiaire (2), et la semelle extérieure (3) étant plus rigide que la semelle intermédiaire (2), **caractérisée en ce que** la semelle intermédiaire (2) est fabriquée en un matériau dans un procédé de moussage intégral, de telle sorte que la peau extérieure et la structure cellulaire sont constituées d'un matériau uniforme.

2. Chaussure selon la revendication 1, **caractérisée en ce que** la mousse présente un poids spécifique de 40 à 100 kg/m³.

3. Chaussure selon l'une quelconque des revendications 1 ou 2, **caractérisée en ce que** les pores présentent une taille dans la plage allant de 0,5 à 3 mm.

4. Chaussure selon l'une quelconque des revendications précédentes, **caractérisée en ce que** le milieu liquide est de l'eau, un polyol ou un mélange de ceux-ci.

5. Chaussure selon la revendication 4, **caractérisée en ce que** le milieu liquide est de l'eau, qui contient un agent épaississant pour augmenter la viscosité.

6. Chaussure selon l'une quelconque des revendications 1 à 5, **caractérisée en ce que** la semelle intermédiaire (2) contient de l'air en plus du milieu liquide.

7. Chaussure selon l'une quelconque des revendications précédentes, **caractérisée par** une valve (7) dans la semelle intermédiaire (2).

8. Chaussure selon l'une quelconque des revendications précédentes, **caractérisée en ce que** la semelle extérieure (3) et une semelle intérieure entourent la semelle intermédiaire (2), la semelle extérieure (3) étant configurée plus dure que la semelle intérieure.

9. Chaussure selon l'une quelconque des revendications précédentes, **caractérisée par** une semelle intérieure, qui présente des creux pour l'insertion d'éléments de rembourrage.

10. Chaussure selon la revendication 9, **caractérisée en ce que** les creux sont agencés dans la zone du talon et/ou de la tête métatarsienne.

11. Chaussure selon l'une quelconque des revendications 9 ou 10, **caractérisée en ce que** les creux présentent des éléments agrippants.

12. Sandales, en particulier tongs, selon l'une quelconque des revendications précédentes.
